Europäisches Patentamt

European Patent Office

Office européen des brevets

(19)

(11) Veröffentlichungsnummer: **0 073 234**
**B1**

(12)

# EUROPÄISCHE PATENTSCHRIFT

(45) Veröffentlichungstag der Patentschrift:
**08.05.85**

(21) Anmeldenummer: **82900944.8**

(22) Anmeldetag: **06.03.82**

(86) Internationale Anmeldenummer:
**PCT/EP 82/00045**

(87) Internationale Veröffentlichungsnummer:
**WO 82/03101 (16.09.82 Gazette 82/22)**

(51) Int. Cl.⁴: **E 04 C 2/54**, E 04 C 2/36 //
A01G9/14

(54) **ALS BAUELEMENT DIENENDE STEGPLATTE.**

Verbunden mit 82101795.1 (europäische
Anmeldenummer) durch Entscheidung vom 13.10.83.

(30) Priorität: **07.03.81 DE 3108711**

(43) Veröffentlichungstag der Anmeldung:
**09.03.83 Patentblatt 83/10**

(45) Bekanntmachung des Hinweises auf die Patenterteilung:
**08.05.85 Patentblatt 85/19**

(84) Benannte Vertragsstaaten:
**AT BE CH DE FR GB IT LI NL SE**

(56) Entgegenhaltungen:
**DE - A - 2 800 811**
**FR - A - 1 289 311**
**FR - A - 2 073 791**
**FR - A - 2 414 604**
**GB - A - 714 784**

(73) Patentinhaber: **Röhm GmbH, Kirschenallee
Postfach 4242, D-6100 Darmstadt 1 (DE)**
Patentinhaber: **Heescher, Felix, Rodder Strasse 31,
D-4446 Hörstel-Bevergern (DE)**

(72) Erfinder: **HEESCHER, Felix, Rodder Strasse 31,
D-4446 Hörstel-Bevergern (DE)**

**Beschreibung**

Die Erfindung bezieht sich auf eine als Bauelement dienende, aus einem durchsichtigen Kunststoff bestehende Stegplatte, vorzugweise Doppelsteg- oder Mehrfachstegplatte.

Insbesondere im Gewächshausbau, hierauf aber keineswegs beschränkt ist es bekannt, sogenannte Doppelsteg- oder Mehrfachstegplatten einzusetzen, die aus zwei ebenen Konststoffscheiben bestehen, die miteinander durch einen bestimmten Abstand voneinander aufweisende Stege verbunden sind. Es ist weiterhin bekannt, diese Platten zu wölben, wobei die Wölbung keinen sehr großen Biegeradius aufweisen kann und um eine Biegeachse erfolgt, die quer zur Längserstreckung der Stege ausgerichtet ist. Versuche, die bekannten Platten um eine Biegeachse zu biegen, die parallel zur Längserstreckung der Stege ausgerichtet war, führten zum Zerstören der Platten. Solche biegefähigen Doppelsteg- oder Mehrfachstegplatten bestehen vorzugsweise aus Polycarbonat. Aufgrund der Tatsache der nur quer zur Stegerstreckung möglichen Biegung werden die Doppelstegplatten im wesentlichen nur als plattenförmige Bauteile geliefert, wobei dann an den Randkanten dieser plattenförmigen Bauteile aus Metall oder Kunststoff oder Kombinationen dieser beiden Werkstoffe bestehende, kostenaufwendig herzustellende Verbindungselemente angeschlossen werden müssen, die einerseits ein dichtes Anschließen der Platten aneinander, andererseits eine Bewegung der Platten zur Aufnahme der Wärmedehnung bezwecken.

Der Einsatz dieser bekannten Platten, insbesondere für Dachabdeckung von Gewächshäusern, zur Dachabdeckung von Schwimmbädern o. dgl., d. h. also für großflächige Dachabdeckungen hat gezeigt, daß eine einwandfreie zufriedenstellende Abdichtung in den aneinander angrenzenden Plattenbereichen nur schwer, d h. unter erheblichem Kostenaufwand herstellbar ist und daß diese verschleißempfindlichen Teile einen hohen Wartungsbedarf bewirken, der bisher dem Einsatz dieser Platten hinderlich im Wege stand. Außerdem machen diese die Platten tragenden Konstruktionsbauteile einen erheblichen Aufwand notwendig, der zur Erstellung fester und damit teurer Gebäude zwingt.

Der Erfindung liegt die Aufgabe zugrunde, die bekannten, vorzugsweise aus Polycarbonat gefertigten Doppelsteg- oder Mehrfachstegplatten so zu gestalten, daß von der Platte selbst Konstruktionselemente getragen werden können, wobei die Befestigungsmöglichkeit dieser Konstruktionselemente an den Platten unmittelbar beim Herstellungsverfahren erfolgen soll.

Diese der Erfindung zugrundeliegende Aufgabe wird durch die in den Ansprüchen genannten Merkmale gelöst, insbesondere dadurch, daß vorgesehen wird, daß Platten Konstruktionselemente aufnehmen, die die Platten halten und auch gegebenenfalls in der Lage sind, die Formgebung und Formhaltung der Platten zu gewährleisten.

So ist es beispielsweise möglich, die Platten zu durchbohren und in diese Durchbohrungen Konstruktionselemente zu schieben und zu verankern.

Weiterhin ist es möglich, wenigstens eine der beiden durch die Stege miteinander verbundenen Plattenflächen aufzuschneiden oder bei der Herstellung der Platte offen zu gestalten und somit einen matrizenartigen Raum zu schaffen, in den ein Patrizenteil eingesetzt werden kann, das der Halterung und gegebenenfalls Formgebung der Platte dient, indem es in diesem Schlitz gehalten und geführt wird.

Weiterhin werden gemäß der Erfindung quer zur Biegeachse der Stegplatte verlaufende, einteilig aus dem Plattenwerkstoff ausgeformte oder mit dem Plattenwerkstoff materialschlüssig verbundene Profilierungen vorgeschlagen, die an der Ober- und/oder Unterseite vorgesehen werden.

Die Profilierungen sind dabei vorzugsweise schwalbenschwanzförmig gestaltet und mit diesen matrizenartigen Profilierungen arbeiten patrizenartige Bauteile zusammen, die in den durch die Profilierungen gebildeten Schlitzen verschiebbar sein können, aber hinsichtlich ihrer Lage festlegbar sind und die nun zum Anschluß von Halte- und Konstruktionsmitteln dienen, so daß beispielsweise ein Biegen der Platten möglich ist, die Biegung dieser Platte aber durch eingespannte Spannelemente aufrechterhalten wird, wobei die Spannelemente in den in der Platte vorgesehenen Profilierungen verankert werden.

Gemäß einem vorteilhaften Merkmal der Erfindung ist weiterhin vorgesehen, daß die Patrizenteile sich quer zu den sie aufnehmenden Schlitzen bewegen können, so daß dadurch Wärmespannungen und Wärmedehnungen der Platten in allen möglichen Richtungen aufgenommen und ausgeglichen werden können, indem die Patrizenteile in Längsachse der Schlitze oder Profilierungen gleiten können und quer zur Längsachse in dem Patrizenteil beispielsweise Langloch oder ähnliche Bohrungen vorgesehen sind, die eine Verschiebung quer zur Achse der Profilierung oder des Einschnittes ermöglichen.

Zusammen mit den Spannelementen können gleichzeitig Befestigungselemente in den Profilierungen angeordnet werden, die z. B. zum Anschluß an dem festen Fundament dienen und damit die gebildeten Bauteile, die beispielsweise tunnelförmig gestaltet sein können, festlegen.

Außerdem können die in den Platten vorgesehenen Profilierungen zur Aufnahme zusätzlicher Elemente dienen, wie beispielsweise Schattierungsgewebe o. dgl., wobei dadurch, daß auch an der Außenseite der Platten entsprechende Profilierungen vorgesehen werden, auch an der Außenseite erforderliche Hilfsmittel somit in einfachster Weise an die Platten angeschlossen werden können.

Die Platten werden in der vorstehend erläuterten Ausführungsform mit besonderem Vorteil im Gewächshausbau, insbesondere zur Ernteverfrühung bei Freilandgemüsebau eingesetzt.

Ein Ausführungsbeispiel der Erfindung wird nachfolgend anhand der Zeichnung erläutert. In der Zeichnung zeigt dabei

Fig. 1 schaubildlich und nur schematisch die Ausbildung der neuen Platte als gebogenes, tunnelförmiges Bauteil, in

Fig. 2 in einer ebenen Darstellung zur Verdeutlichung des Erfindungsgedankens die in der Platte vorgesehenen Profilierungen und in

Fig. 3 eine ebene Platte gemäß der Erfindung.

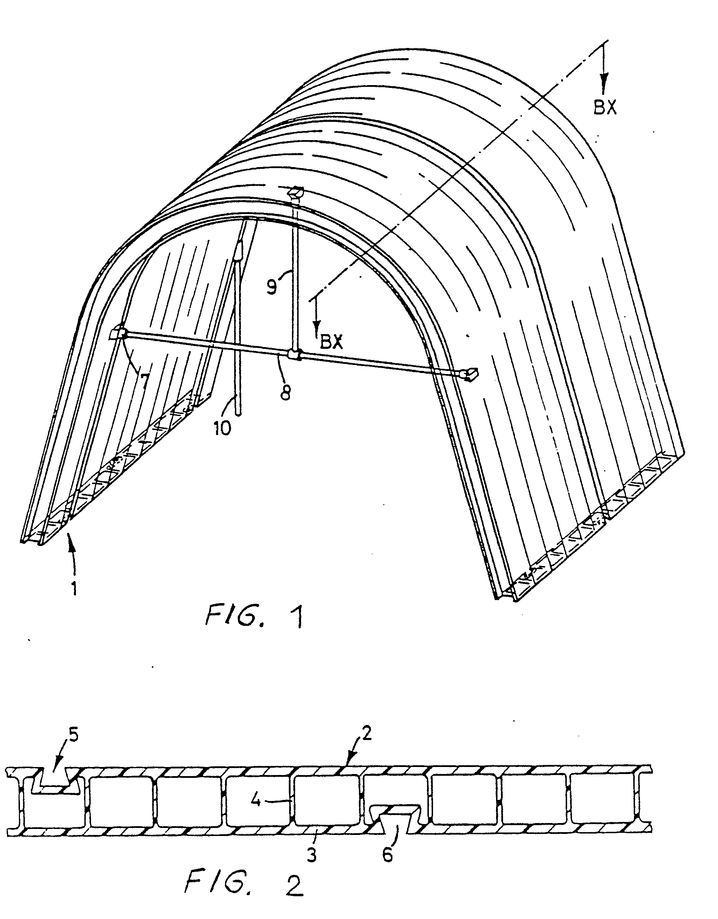

In Fig. 1 ist mit 1 eine beispielsweise aus einem Polycarbonat bestehende Stegplatte bezeichnet, die eine Plattenoberfläche 2 und eine Plattenunterseite 3 aufweist, wobei die diese beiden Platten 2 und 3 verbindenden Stege das Bezugszeichen 4 tragen. In Fig. 1 ist mit BX-BX die Biegeachse eingezeichnet und es ist ersichtlich, daß die Biegung der Platte um die Biegeachse BX-BX quer zur Längserstreckung der Stege erfolgen muß.

Mit 5 und 6 sind in der Plattenoberseite und/oder der Plattenunterseite vorgesehene Profilierungen bezeichnet, die schwalbenschwanzförmig gestaltet sind, wobei die geringere Öffnungsweite jeweils zur Außenseite der Platte hingerichtet ist.

Mit diesen schwalbenschwanzförmigen Profilierungen können in Fig. 1 erkennbare Patrizenteile 7 zusammenwirken, die zusätzlich zu ihrer Gestaltung derart, daß sie in die Profilierungen eingesetzt werden können, auch Mittel aufweisen können, die ein Festlegen dieser Patrizenteile 7 in den Profilierungen 5 und 6 ermöglichen, so daß ein Verschieben der Patrizenteile dann, wenn dies nicht gewünscht ist, verhindert werden kann.

Mit 8 ist in der in Fig. 1 gezeigten Ausführungsform ein Spannelement bezeichnet, das die einmal hergestellte Wölbung der eigentlichen Platte aufrechterhält. Dieses Spannelement kann durch ein weiteres Stützelement 9 zusätzlich mit der Platteninnenseite verbunden sein.

Zur Verdeutlichung dieses Erfindungsgedankens ist weiterhin mit 10 ein zusätzliches Spann- oder Konstruktionselement bezeichnet, das der Verankerung der Platte am Boden oder auf einem entsprechenden Fundament dient.

Es ist erkennbar, daß die erfindungsgemäße Platte einmal unmittelbar, beispielsweise im Gewächshausbau, über dem Beet aufgestellt werden kann, daß es aber in gleicher Weise möglich ist, derartige Platten auf Grundmauern oder Stützmauern aufzusetzen. Auch liegt es selbstverständlich im Rahmen der Erfindung, daß Platten der in Fig. 1 dargestellten Ausführungsform in einer Vielzahl miteinander verbunden werden und so in ihrer Gesamtheit, beispielsweise das Dach eines Gewächshauses, eines Schwimmbades oder einer große Halle bilden können.

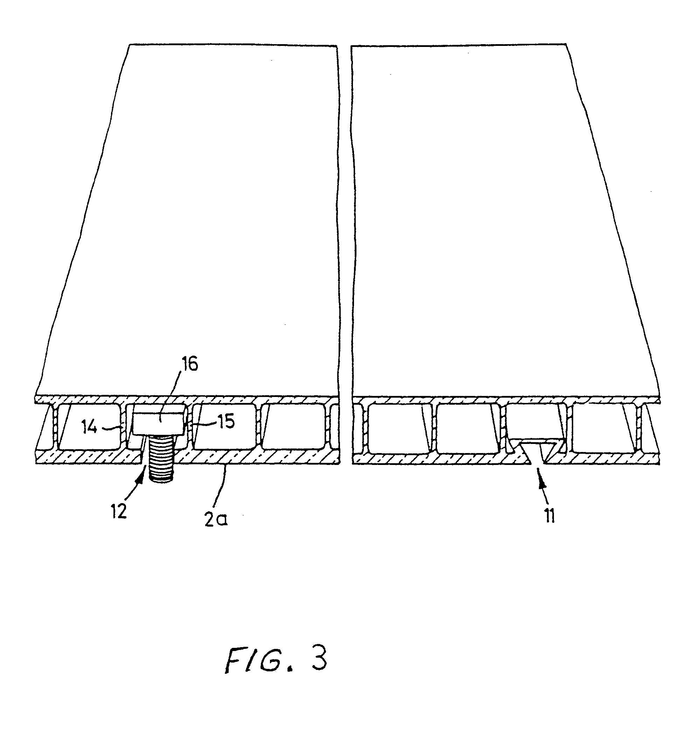

In Fig. 3 ist eine ebene Doppelstegplatte dargestellt, die mit einer schlitzförmigen Profilierung 11 ausgerüstet ist, in der die in Fig. 1 beispielsweise dargestellten Patrizenteile 7 eingesetzt werden können. Diese Patrizenteile 7 können, wie in der Beschreibungseinleitung erwähnt, quer zur Längsachse der Profilierung 11 beweglich sein und somit Wärmespannungen ausgleichen, wobei durch das Zusammenspiel der Bewegung in Längsachse der Profilierung 11 und der im Patrizenteil 7 vorgesehenen Bewegungsmöglichkeiten quer zu der erstgenannten Bewegungsmöglichkeit die gewünschte allseitige Freiheit erreicht wird.

In Fig. 3 ist weiterhin ein Einschnitt 12 dargestellt, der dadurch erzielt wird, daß die Plattenoberfläche 2a eingeschnitten wird oder diese Formgebung bereits im Herstellungsverfahren erhält, wodurch ein Schlitz erzielt wird, dessen Größe kleiner als der Abstand der Stege 14 und 15 voneinander ist. Durch diese Anordnung ist es möglich, ein T-förmiges Patrizenteil 16 einzusetzen, das nunmehr der Halterung der Platte dient. Bei dieser Ausführungsform ist es möglich, ebene Platten einfach durch die Anwendung der Konstruktionsteile, wie sie anhand von Fig. 1 erläutert worden sind, in ihrer Lage zu halten und dadurch beispielsweise ein Gewächshaus, eine Halle, eine Schwimmbadhalle od. dgl. zu erstellen. Fig. 3 zeigt, daß es dabei möglich ist, die Plattenfläche 2a verstärkt auszubilden.

**Patentansprüche**

1. Als Bauelement dienende, aus einem durchsichtigen Kunststoff bestehende Stegplatte (1), vorzugsweise Doppel- oder Mehrfachstegplatte, gekennzeichnet durch eine Mehrzahl von Einschnitten (5, 6, 11, 12) oder Ausnehmungen in wenigstens einer der durch Stege (4, 14, 15) miteinander verbundenen Plattenflächen (2, 2a, 3).

2. Stegplatte nach Anspruch 1, gekennzeichnet durch parallel zu den Stegen (14, 15) die Platte durchquerende Einschnitte (12) oder Ausnehmungen.

3. Stegplatte nach den Ansprüchen 1 oder 2, gekennzeichnet durch einen Einschnitt (12), dessen Größe kleiner als der Abstand der Stege (14, 15) voneinander ist.

4. Stegplatte nach Anspruch 3, dadurch gekennzeichnet, daß die die Einschnitte (12) aufweisende Plattenfläche (2a) verstärkt ausgebildet ist.

5. Stegplatte nach Anspruch 1, gekennzeichnet durch quer zur Biegeachse (BX-BX) der Stegplatte (1) verlaufende, einteilig aus dem Plattenwerkstoff ausgeformte oder mit dem Plattenwerkstoff materialschlüssig verbundene Profilierungen (5, 6).

6. Stegplatte wenigstens nach Anspruch 1, gekennzeichnet durch an der Ober- und/oder Unterseite (2, 3) einteilig aus der Platte (1), aus dem Plattenwerkstoff ausgeformte oder mit dem Plattenwerkstoff materialschlüssig verbundene Profilierungen.

7. Stegplatte wenigstens nach Anspruch 5 und 6, dadurch gekennzeichnet, daß die Profilierungen (5, 6) schwalbenschwanzförmig ausgebildet sind, wobei die geringere Öffnungsweite zur Plattenoberfläche hingerichtet ist.

8. Stegplatte nach einem oder mehreren der vorhergehenden Ansprüche, gekennzeichnet durch mit Einschnitten oder den Profilierungen (5, 6) in der Stegplatte (1) zusammen wirkende Patrizenteile (7), die zur Aufnahme und Halterung von Konstruktionselementen (8, 9, 10) dienen.

9. Stegplatte nach Anspruch 8 dadurch gekenneichnet, daß die mit den matrizenartigen Einschnitten oder Profilierungen (5, 6) zusammenwirkenden Patrizenteile (7) in den Profilierungen (5, 6) hinsichtlich in Längsrichtung der Profilierungen (5, 6) ausgerichteten Verschiebebewegungen festlegbar sind.

10. Stegplatte nach einem oder mehreren der vorhergehenden Ansprüche, dadurch gekennzeichnet, daß die in den Einschnitten oder Profilierungen (5, 6) verschieblichen und/oder festlegbaren Patrizenteile (7) quer zur Verschieberichtung in den Einschnitten oder Profilierungen verschieblich ausgebildet sind.

11. Verwendung der Stegplatten nach Anspruch 1 bis 10 im Gewächshausbau, insbesondere zur Ernteverfrühung bei Freilandgemüsebau.

## Claims

1. Web panel (1), preferably a double or multiple web panel, consisting of transparent plastics material and serving as a construction element, characterised by a plurality of grooves (5, 6, 11, 12) or recesses in at least one of the panel surfaces (2, 2a, 3) which are joined together by webs (4, 14, 15).

2. Web panel as claimed in claim 1, characterised in by grooves (12) or recesses extending across the panel parallel to the webs (14, 15).

3. Web panel as claimed in claim 1 or 2, characterised by a groove (12) which is smaller than the spacing of the webs (14, 15) from one another.

4. Web panel as claimed in claim 3, characterised in that the panel surface (2a) containing the grooves (12) is reinforced.

5. Web panel as claimed in claim 1, characterised by profiles (5, 6) extending at right angles to the bending axis (BX-BX) of the web panel (1), formed integrally from the material of the panel or joined to the panel material by material bonding.

6. Web panel at least as claimed in claim 1, characterised by profiles on the top and/or underside (2, 3) integral with the panel (1), formed from the panel material or joined to the panel material by material bonding.

7. Web panel at least as claimed in claims 5 or 6, characterised in that the profiles (5, 6) are dovetail-shaped in construction, the narrower width of opening being directed towards the surface of the panel.

8. Web panel as claimed in one or more of the preceding claims, characterised by top die parts (7), which cooperate with grooves or with the profiles (5, 6) in the web panel (1) and which serve to receive and hold construction elements (8, 9, 10).

9. Web panel as claimed in claim 8, characterised in that the top die parts (7) cooperating with the matrix-like grooves or profiles (5, 6) can be secured in the profiles (5, 6) against movements of displacement in the longitudinal direction of the profiles (5, 6).

10. Web panel as claimed in one or more of the preceding claims, characterised in that the top die parts (7) which are movable and/or fixable in the groove or profiles (5, 6) are constructed to be movable at right angles to the direction of displacement in the grooves or profiles.

11. Use of the web panels as claimed in claims 1 to 10 in greenhouse construction, particularly for obtaining an early crop in outdoor vegetable cultivation.

## Revendications

1. Panneau nervuré (1), fait d'une matière synthétique transparente et servant d'élément de construction, de préférence de panneau nervuré double ou multiple, caractérisé par une multiplicité d'entailles ou de cavités (5, 6, 11, 12) dans l'une au moins des faces (2, 2a, 3) du panneau qui sont reliées entre elles par des nervures (4, 14, 15).

2. Panneau nervuré selon la revendication 1, caractérisé par des entailles (12) ou cavités qui s'étendent dans le panneau parallèlement aux nervures (14, 15).

3. Panneau nervuré selon la revendication 1 ou 2, caractérisé par une entaille (12) dont la largeur est plus petite que la distance mutuelle des nervures (14, 15).

4. Panneau nervuré selon la revendication 3, caractérisé en ce que la plaque (2a) du panneau qui comporte les entailles (12) est réalisée sous forme renforcée.

5. Panneau nervuré selon la revendication 1, caractérisé par des profilés (5, 6) qui s'étendent transversalement par rapport à l'axe de flexion (BX-BX) du panneau nervuré (1), et sont formés d'une seule pièce à partir du matériau du panneau ou sont unis par fusion de matière au matériau du panneau.

6. Panneau nervuré selon la revendication 1, caractérisé par des profilés formés d'une seule pièce avec le panneau (1), sur la face supérieure et/ou inférieure (2, 3) et à partir du matériau de celui-ci, ou unis par fusion de matière au matériau du panneau.

7. Panneau nervuré selon la revendication 5 ou 6 au moins, caractérisé en ce que les profilés (5, 6) sont réalisés en forme de queue d'aronde, la plus petite largeur de l'ouverture étant dirigée vers la surface du panneau.

8. Panneau nervuré selon l'une quelconque des revendication 1 à 7, caractérisé par des éléments mâles (7) qui coopèrent avec des entailles ou les profilés (5, 6) formés dans le panneau nervuré (1) et qui servent à recevoir et à maintenir les éléments de construction et d'assemblage (8, 9, 10).

9. Panneau nervuré selon la revendication 8, caractérisé en ce que les éléments mâles (7) qui coopèrent avec les entailles ou profilés femelles (5, 6) peuvent être fixés dans les éléments profilés (5, 6) en ce qui concerne les mouvements coulissants dans la direction longitudinale des profilés (5, 6).

10. Panneau nervuré selon l'une quelconque des revendications 1 à 9, caractérisé en ce que les éléments mâles (7) qui coulissent et/ou peuvent être fixés dans les entailles ou profilés (5, 6) sont réalisés de manière à pouvoir se déplacer dans les entailles ou profilés, perpendiculairement au mouvement coulissant.

11. Utilisation des panneaux nervurés selon l'une quelconque des revendications 1 à 10 dans la construction de serres, en particulier pour le mûrissement précoce de cultures maraîchères.

FIG. 1

FIG. 2

FIG. 3